# EUROPEAN PATENT SPECIFICATION

(11) **EP 3 992 160 B1**
(45) Date of publication and mention of the grant of the patent: **22.04.2026**
(21) Application number: 20847458.5
(22) Date of filing: 14.07.2020
(51) Int. Cl.: C03B 27/044, C03B 27/04

(54) **CURVED GLASS TOUGHENING APPARATUS WITH STRESS PATTERN WEAKENING EFFECT**
HÄRTUNGSVORRICHTUNG FÜR GEBOGENES GLAS MIT SPANNUNGSMUSTERSCHWÄCHUNGSEFFEKT
APPAREIL PERMETTANT DE TREMPER UN VERRE INCURVÉ AYANT UN EFFET D'ATTÉNUATION DES PROFILS DE CONTRAINTES

(30) Priority: 29.07.2019 CN 201910688109
(43) Date of publication of application: 04.05.2022
(73) Proprietor: Luoyang Landglass Technology Co., Ltd., Luoyang, Henan 471000 (CN)
(72) Inventor: ZHAO, Yan, Luoyang, Henan 471000 (CN); ZHANG, Kezhi, Luoyang, Henan 471000 (CN); ZHANG, Xibin, Luoyang, Henan 471000 (CN)
(74) Representative: Grünecker Patent- und Rechtsanwälte PartG mbB
(86) International application number: PCT/CN2020/101918
(87) International publication number: WO 2021/017820

(56) References cited:
- EP-A1- 0 128 842
- EP-A1- 2 277 836
- WO-A1-2011/122680
- CN-A- 101 980 980
- CN-A- 101 980 980
- CN-A- 110 372 190
- CN-A- 110 372 191
- CN-U- 210 506 065
- GB-A- 2 030 128
- JP-A- 2000 281 369
- US-A- 4 711 655

## Description

### TECHNICAL FIELD

The present invention relates to the technical field of flexible shaft bent glass toughening, and in particular to a curved glass toughening apparatus with an effect of weakening stress patterns.

### BACKGROUND

In the production process of toughened glass, glass enters a toughening section after being heated in a roller-table type heating furnace, but it tends to leave stress patterns (commonly called air patterns) on the glass due to uneven air blowing in the toughening process of the glass. As an indicator of appearance quality, the air patterns on toughened glass attract more and more people's attentions. In order to reduce the air patterns as much as possible, the technicians in the industry have taken various ways, such as accelerating the glass discharge speed, optimizing the layout of air holes, and swinging an air grid laterally. However, formation of the air patterns is complicated, and in addition to that in a width direction of an apparatus, it is necessary to form uniform cooling, more importantly, it is also necessary to eliminate formed air patterns in a length direction of the apparatus. So far, air patterns of a toughening furnace are still a defect of toughened glass, and people expect to have a better air pattern weakening technology to make the appearance of toughened glass better.

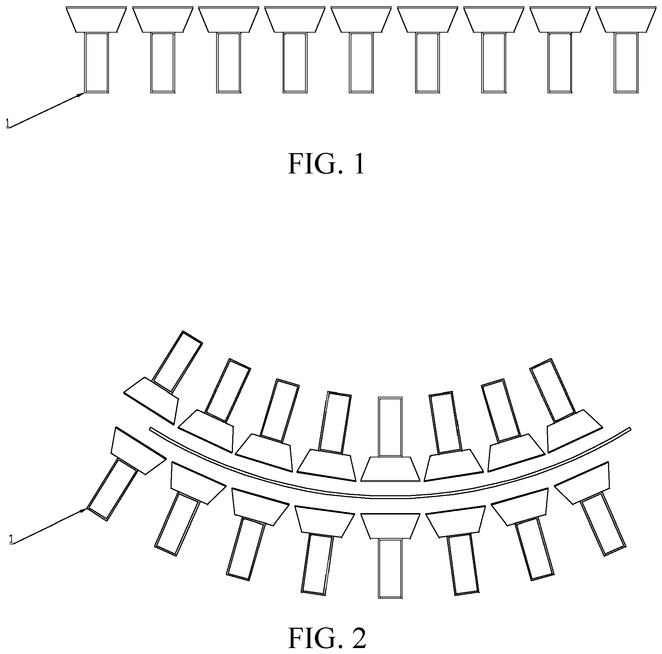

Nowadays, according to a flexible shaft bending toughening forming method, mainly a flexible shaft roller table is bent in a direction perpendicular to a conveying direction, and two ends of a flexible shaft group arranged in parallel are provided with arc-changing mechanisms parallel to the flexible shaft group in the axial direction thereof. Two ends of a plurality of main air supply pipelines are respectively fixed to toothed plates on the arc-changing mechanisms at corresponding positions, and a flexible shaft is arranged perpendicularly to the main air supply pipeline; and air boxes are alternately arranged on the main air supply pipeline corresponding to gaps of the flexible shaft, the air box is hollow inside and communicated with the main air supply pipeline, and airflow is blown to the curved glass to be toughened from an air outflow end of the main air supply pipeline through the air box from an air outlet formed in the air box. In order to ensure that air blowing is uniform in the bending process, in the prior art, mostly a manner of arranging rows of air boxes on profile is adopted for air blowing, and the rows of air boxes are distributed between gaps of the flexible shaft roller table. As shown in FIG. 1, stress patterns are mainly caused by that with the use of a technology with an air grid composed of air boxes, there will be obvious stress pattern marks left on the glass due to the gaps between the air boxes, seriously affecting the aesthetics and use effect of the glass.

A flexible shaft bent toughened glass toughening furnace is composed of an upper sheet table, a heating furnace, a forming and toughening unit, a lower sheet table, and the like, and all working sections are connected by a conveying roller table with an equal-height horizontal conveying surface to constitute a production line.

In operation, the glass is placed on the upper sheet table, the glass is fed into the heating furnace by the conveying roller table, heated to a suitable temperature, and then conveyed by the roller table to the forming and toughening unit, in the unit, the glass is bent into a desired shape, and then toughened and cooled by air blowing by an air grid therein to form toughened glass, and finally, the glass is fed into the lower sheet table by the roller table to complete a working cycle.

The above-mentioned forming and toughening unit is composed of a bendable roller table, a main air supply pipeline, a roller table transmission system, a bendable air grid, an air grid driving device, a machine frame, a control system, and the like; before the glass is formed and cooled by air blowing, the bendable air grid therein can be pre-bent into a shape required for the glass, so as to make cooling of the glass more uniform, thereby making the stress on the surface of the glass and inside the glass more uniform; and it is also possible to bend upper and lower air grids synchronously with bending of the bendable roller table, then upper and lower surfaces of the glass are toughened by air blowing, and finally the quality requirement of toughened glass is met. In order to be bent, an existing bending air grid is composed of a plurality of independent air boxes, and mounted on the main air supply pipeline, and the main air supply pipeline is driven by the arc-changing mechanism to drive the rows of air boxes to be bent into the shape required by the glass shape, as shown in FIG. 2.

However, due to the fact that in the air grid composed of independent air boxes, the air outflow pressure of each air hole is uneven and there are gaps between the air boxes, so that toughening and cooling of the curved glass are uneven, thereby leaving obvious stress patterns (air patterns) on the processed toughened glass at positions of the gaps of the air boxes, seriously affecting the appearance quality of a toughened glass product, and this is a technical problem to be solved urgently in the industry.

### SUMMARY

GB 2 030 128 A relates to an apparatus and method of prestressing glass sheets of a sandwich safety pane.

EP 2 277 836 A1 relates to an air-cooling/tempering device and an air-cooling/tempering method for a glass sheet.

To resolve the foregoing technical problems to be solved proposed in this solution, the present invention provides the following technical solution.

A curved glass toughening apparatus defined in claim 1.

Further, the plurality of flexible air grid units are arranged in parallel between flexible shaft roller table gaps, a main air supply pipeline is located on one side of the flexible air grid unit away from the glass to be processed, projections of the main air supply pipelines arranged in parallel and the plurality of flexible air grid units arranged in parallel in a vertical direction are in a mutually staggered mesh shape, and the main air supply pipeline is communicated with the flexible air grid unit via the air inflow port from a projection intersection point position; and arc-changing mechanisms arranged at two ends of the main air supply pipelines arranged in parallel drive the flexible air grid to be bent with the arc-changing mechanism when the glass to be processed is bent and formed.

Further, the flexible air grid unit is a corrugated pipe.

Further, the main air supply pipelines arranged in parallel and the plurality of flexible air grid units arranged in parallel have an included angle of 90° on a vertical projection plane.

Further, the flexible air grid unit is a cylindrical or prismatic air grid.

Further, two axial ends of the flexible air grid unit are of a closed structure.

Further, the air inflow ports are respectively communicated with air outflow ends of the main air supply pipelines.

A curved glass toughening apparatus with air outflow mechanism further includes an air outflow mechanism.

The air outflow mechanism is arranged on a flexible air grid unit, and includes a fluid smoothing structure arranged on an inner wall of the flexible air grid unit and/or an outlet airflow orienting and stabilizing structure arranged on an outer wall of the flexible air grid unit; and the fluid smoothing structure is used to reduce resistance when airflow circulates in the flexible air grid, and the outlet airflow orienting and stabilizing structure is used to constrain the direction of a jetted airflow and make the flow velocity and flow quantity of the airflow more uniform at the same time.

Further, the flexible air grid unit is a corrugated pipe, and the fluid smoothing structure is a composite rubber layer and used for filling a corrugated inner wall of the corrugated pipe into a smooth inner wall.

Further, the air outflow hole is located at a maximum corrugation outer diameter position of the corrugated pipe.

Further, the outlet airflow orienting and stabilizing structure is an independent air nozzle communicated with each of the air outflow holes, the independent air nozzle is of a tubular structure, one end of the independent air nozzle is in butt joint with the air outflow hole and the other end of the independent air nozzle faces the glass to be processed.

Further, the outlet airflow orienting and stabilizing structure is a fixing piece arranged on a corrugated outer wall of the corrugated pipe and covering the air outflow hole, the fixing piece is provided with air spraying holes corresponding to positions of the air outflow holes, and the air spraying holes are communicated with the air outflow holes.

Further, the quantity of the air outflow holes is two or more.

A curved glass toughening apparatus with butt-joint device further includes an air inflow butt-joint auxiliary device.

The butt-joint auxiliary device is used for butting a main air supply pipeline with a flexible air grid unit, the butt-joint auxiliary device includes an air inlet, an air outlet and a channel communicating the air inlet with the air outlet, a fixed extension in butt joint with an air supply port of the main air supply pipeline is arranged at a position of the air inlet, and a butt-joint end in butt joint with an air inflow port of the flexible air grid unit is arranged at a position of the air outlet.

Further, the butt-joint end is provided with a sealed outer edge matched with an outer wall contour of the flexible air grid unit.

Further, the flexible air grid unit is a corrugated pipe.

Further, the butt-joint end is connected with the flexible air grid unit in a bonding mode or a riveting mode.

Further, the butt-joint end is provided with an annular clamping hoop for locking the metal corrugated pipe.

Further, the butt-joint auxiliary device is a flexible butt-joint auxiliary device.

Further, the flexible butt-joint auxiliary device is made from high-temperature-resistant rubber.

In the present invention, an air grid unit composed of air boxes independent from each other in the air grid is replaced with a through flexible air grid unit, so that a continuous air grid perpendicular to the movement direction of glass is formed. During the movement of glass, air blows onto toughened glass, such that strip-shaped air patterns remaining in a cooling process performed by an air grid in the prior art are removed, thereby greatly improving the appearance and quality of toughened glass.

By adopting the air outflow mechanism provided by the technical solution, an airflow channel with many corrugations on the inner wall of the flexible air grid unit is smoothed to reduce fluid resistance; and the additionally arranged independent air nozzle or fixing piece is free of deformation, the airflow ejected out of the air outlet of the flexible air grid thereof is stably guided so that the jetting direction, flow velocity and flow quantity of the airflow are regulated and controlled to be oriented, orderly and stable to a certain extent.

For the flexible air grid with an outer surface being an irregular curved surface, a butt-joint position can be completely matched with the outer contour of the flexible air grid unit; and when the flexible air grid bends along with the arc-changing mechanism, the outer surface curvature of the flexible air grid may change, a butt-joint portion can change into the irregular curved surface accordingly, and an air leaking phenomenon cannot occur.

The air grid adopts a continuous air grid mechanism to replace an air grid composed of discontinuous air boxes in the prior art, so that when the curved toughened glass is processed, a problem of a stress defect caused by air box gaps cannot occur. A processing method in this field is changed fundamentally, and it is a pioneering advance.

### BRIEF DESCRIPTION OF THE DRAWINGS

FIG. 1 is a schematic diagram of a split-type air box used for curved glass toughening in the prior art;
FIG. 2 is a schematic diagram of a bent state for adopting a structure in FIG. 1 when glass is processed;
FIG. 3 is a schematic diagram of an assembling plane of a flexible air grid unit and a main air supply pipeline;
FIG. 4 is a schematic diagram of a bent state for adopting a structure in FIG. 3 when glass is processed;
FIG. 5 is a simple three-dimensional schematic diagram of assembling of the main air supply pipeline and the flexible air grid unit;
FIG. 6 is a longitudinal sectional diagram of an axis of a flexible air grid unit with a fluid smoothing structure;
FIG. 7 is a top view of a flexible air grid unit with an independent air nozzle;
FIG. 8 is a schematic diagram of a radial cross section of FIG. 7;
FIG. 9 is a top view of a flexible air grid unit with a fixing piece;
FIG. 10 is a schematic diagram of a radial cross section of FIG. 9;
FIG. 11 is a view of FIG. 5 at a visual angle A;
FIG. 12 is a view of FIG. 5 at a visual angle B;
FIG. 13 is a toughened glass air pattern view under a polarizer in the prior art;
FIG. 14 is a toughened glass air pattern view under a polarizer when a technology of the present invention is applied; and
FIG. 15 is an experimental example stress testing table.

Reference numerals: main air supply pipeline 1, air inflow port 21, flexible air grid unit 2, air outflow hole 22, Composite rubber layer 23, independent air nozzle 24, fixing piece 25, air spraying hole 251, air supply port 11, flexible air grid 2, butt-joint auxiliary device 3, air inlet 4, air outlet 5, butt-joint end 51.

### DETAILED DESCRIPTION

The technical solutions in the present invention are clearly and completely described below with reference to the accompanying drawings.

In the description of the present invention, it should be noted that orientation or position relationships indicated by the terms such as "center", "above", "below", "left", "right", "vertical", "horizontal", "inside", and "outside" are based on orientation or position relationships shown in the accompanying drawings, and are used only for ease and brevity of illustration and description of the present invention, rather than indicating or implying that the mentioned apparatus or component must have a particular orientation or must be constructed and operated in a particular orientation. Therefore, such terms should not be construed as limiting of the present invention.

In the description of the present invention, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. The specific meanings of the above terms in the present invention may be understood according to specific circumstances for a person of ordinary skill in the art.

Referring to FIG. 2, split-type air boxes are mostly adopted in the prior art, and stress patterns can be formed on a surface of glass to be processed at positions of gaps between the air boxes. Rectangular frames in FIG. 2 are main air supply pipelines 1, airflow is blown to air boxes in trapezoidal parts in the figure from the main air supply pipelines, and the air box is communicated with the main air supply pipeline 1. Upper and lower surfaces of the curved glass to be processed are each provided with the above-mentioned structure.

In a method for weakening stress patterns of toughened curved glass,
a through continuous reversible deformation cavity replaces an original split-type air box to serve as an air grid;
a fluid smoothing structure is distributed inside the cavity and used for reducing fluid resistance;
an outlet airflow orienting and stabilizing structure is distributed outside the cavity and used for constraining the direction, flow velocity and flow quantity of a jetted airflow; and
a butt-joint device capable of changing with the change in the curvature of a curved face of the cavity is arranged between the cavity and an air supply source for the cavity.

### Embodiment 1

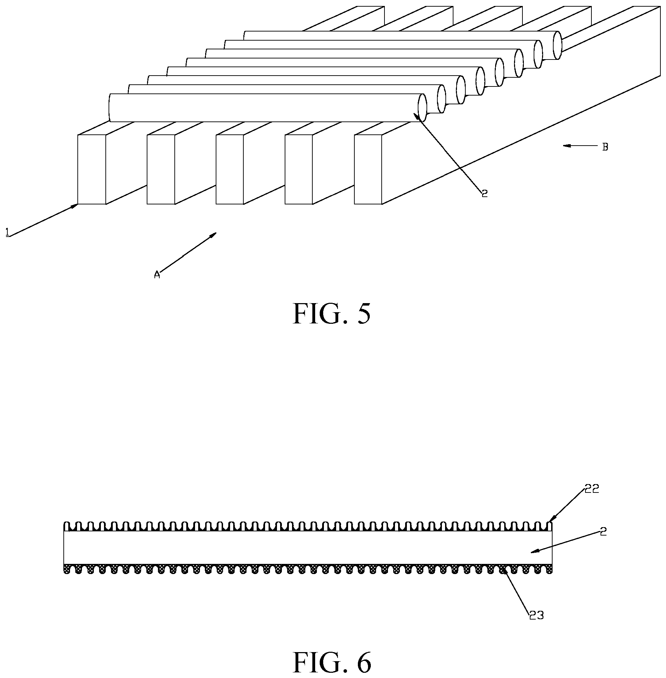

When toughened glass was processed, main air supply pipelines 1 and flexible air grid units 2 were arranged as in FIG. 5, and arc-changing mechanisms (for the arc-changing mechanism, herein, please refer to a glass bending and forming mechanism in CN201220306623.8) were arranged at two ends of the main air supply pipeline. The flexible air grid unit 2 changed a radian accordingly when the arc-changing mechanism was bent.

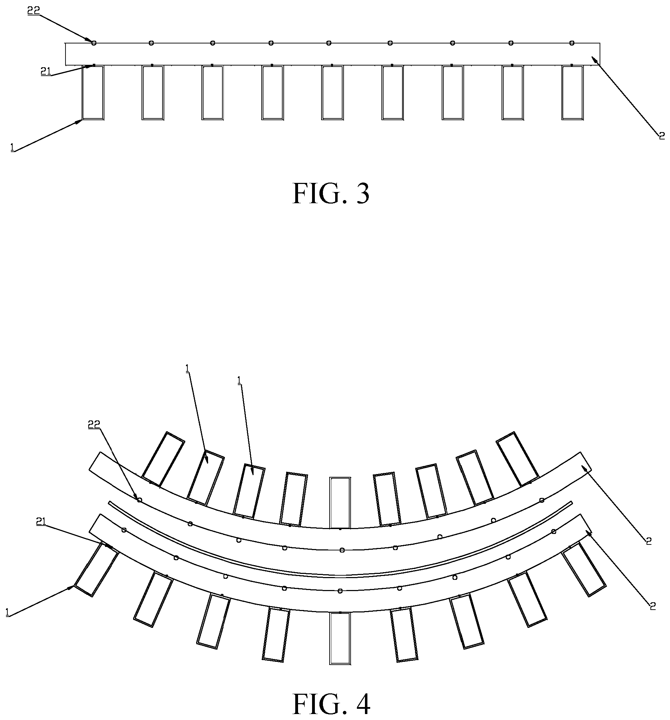

The present embodiment provided a curved glass toughening apparatus with an effect of weakening stress patterns, referring to FIG. 3, the apparatus was used for flexible shaft bent glass toughening, the apparatus included a flexible air grid, the flexible air grid was composed of one or more flexible air grid units 2, the flexible air grid unit 2 was a bendable flexible tubular structure through inside, the flexible air grid unit 2 was provided with a plurality of air outflow holes 22 and air inflow ports 21 communicated with an interior space thereof, and the air outflow hole 22 faced glass to be processed; and the air inflow ports 21 were respectively communicated with air outflow ends of the main air supply pipelines 1.

In use, upper and lower surfaces of the curved glass to be processed were each provided with a structure of the above-mentioned flexible air grid unit 2, and air blew to the glass to be processed through the structure, referring to FIG. 4, and then the upper and lower surfaces of the glass could be toughened.

The present embodiment showed a flexible air grid mechanism applied to curved glass toughening, because the whole flexible air grid mechanism was a bendable flexible tubular structure through inside and could uniformly deform along with the arc-changing mechanism, the technical solution of the flexible air grid mechanism could avoid a phenomenon that air patterns existed at positions of air box gaps shown by air boxes or air box equivalent substitutions in the prior art and had a remarkable stress pattern weakening effect for a curved glass toughening process.

It should be noted that the flexible air grid unit 2 was tubular, two ends thereof might not be closed, and were used as the air inflow ports 21 to blow air from the two ends to an interior space thereof, and airflow was blown out from the air outflow hole 22 and blown to the glass to be processed.

It should also be noted that two axial ends of the flexible air grid unit 2 are of closed structures, so as to ensure that the airflow could only be blown out through the air outflow holes in the flexible air grid unit 2; the flexible air grid unit 2 with an interior through and end portions closed could be directly and integrally made in production; and it was also possible to combine a main body structure of the flexible air grid unit 2 with the end portions in a split mode, firstly the main body structure of the flexible air grid unit 2 with the end portions not closed was made, and then the end portions were sealed at the two axial ends in modes of plugs, bolts, cover plates, etc.

It should be noted that in the prior art, a main air supply pipeline and profile for supporting the flexible air grid used a combined structure, two components of the combined structure could also be functionally separated, namely, a support satisfying requirements of the arc-changing mechanism was independently provided for the flexible air grid while ventilating at the two end portions of the flexible air grid.

Each tubular flexible air grid and the arc-changing mechanism were bound synchronously, and a bending curve was adjusted for each flexible air grid to meet different product requirements.

### Embodiment 2

The present embodiment was further limited on the basis of Embodiment 1, a plurality of flexible air grid units 2 were arranged in parallel between flexible shaft roller table gaps, a main air supply pipeline 1 was located on one side of the flexible air grid unit 2 away from the glass to be processed, projections of the main air supply pipelines 1 arranged in parallel and the plurality of flexible air grid units 2 arranged in parallel in a vertical direction were in a mutually staggered mesh shape, and the main air supply pipeline 1 was communicated with the flexible air grid unit 2 via an air inflow port 21 from a projection intersection point position, referring to FIG. 5; and arc-changing mechanisms arranged at two ends of the main air supply pipelines 1 arranged in parallel drove the flexible air grid unit 2 to be bent with the arc-changing mechanism when the glass to be processed was bent and formed. Two axial ends of the flexible air grid unit 2 are of closed structures, so as to ensure that the airflow could only be blown out through the air outflow holes in the flexible air grid unit 2; the flexible air grid unit 2 with an interior through and end portions closed could be directly and integrally made in production; and it was also possible to combine a main body structure of the flexible air grid unit 2 with the end portions in a split mode, firstly the main body structure of the flexible air grid unit 2 with the end portions not closed was made, and then the end portions were sealed at the two axial ends in modes of plugs, bolts, cover plates, etc.

The flexible air grid unit 2 was a metal corrugated pipe. The main air supply pipelines 1 arranged in parallel and the plurality of flexible air grid units 2 arranged in parallel had an included angle of 90° on a vertical projection plane.

It should be noted that since the main air supply pipeline might be linked when the arc-changing mechanism was in an operating state, the arc-changing mechanism would not be completely in an absolutely parallel state with each other when the arc-changing mechanism was in the operating state.

### Embodiment 3

The present embodiment provided a curved glass toughening apparatus with air outflow mechanisms on the basis of Embodiment 1. The apparatus further included the air outflow mechanisms. The air outflow mechanism was arranged on a flexible air grid unit 2, and included a fluid smoothing structure arranged on an inner wall of the flexible air grid unit 2 and/or an outlet airflow orienting and stabilizing structure arranged on an outer wall of the flexible air grid unit 2; and the fluid smoothing structure was used to reduce resistance when airflow circulates in the flexible air grid, and the outlet airflow orienting and stabilizing structure was used to constrain the direction of a jetted airflow and make the flow velocity and flow quantity of the airflow more uniform at the same time.

The fluid smoothing structure and the outlet airflow orienting and stabilizing structure might be arranged alternatively or in cooperation.

### Embodiment 4

The present embodiment was further limited on the basis of Embodiment 3, a flexible air grid unit 2 was a corrugated pipe, the corrugated pipe was provided with an air outflow hole 22 in a direction facing the glass to be processed, and the corrugated pipe was further provided with an air supply port communicated with a main air supply pipeline 1. Referring to FIG. 6, a fluid smoothing structure was a composite rubber layer 23 arranged on an inner wall and used for filling a corrugated inner wall of the corrugated pipe into a smooth inner wall.

When the inner wall of the corrugated pipe full of corrugations was changed to the smooth inner wall, the internal fluid resistance of the corrugated pipe became smaller, a wall thickness at the air outflow hole 22 also increased, and swinging of a spraying direction of the airflow became smaller.

### Embodiment 5

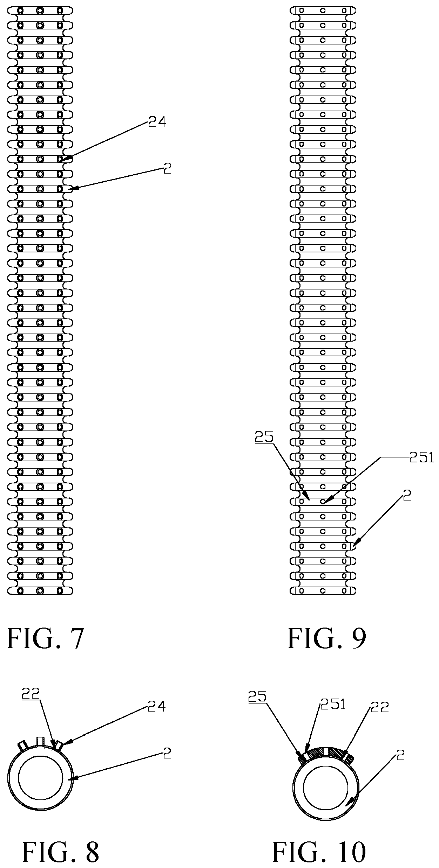

The present embodiment was further limited on the basis of Embodiment 3, a flexible air grid unit 2 was a corrugated pipe, the corrugated pipe was provided with an air outflow hole 22 in a direction facing the glass to be processed, and the corrugated pipe was further provided with an air supply port communicated with a main air supply pipeline 1. Referring to FIG. 7, the air outflow hole 22 was located at a maximum corrugation outer diameter position of the corrugated pipe. An outlet airflow orienting and stabilizing structure was an independent air nozzle 24 communicated with each of the air outflow holes 22, the independent air nozzle 24 was of a tubular structure, one end of the independent air nozzle was in butt joint with the air outflow hole 22 and the other end of the independent air nozzle faces the glass to be processed. Referring to FIG. 8, the number of air outflow holes 22 formed in each corrugation in a direction facing the glass to be processed is two to four.

The independent air nozzle 24 was made of a material not prone to deformation, and an inner diameter of the independent air nozzle 24 did not deform when the flexible air grid unit 2 deformed due to an arc-changing mechanism, so that an air direction was determined while gas was jetted more stably.

### Embodiment 6

The present embodiment was further limited on the basis of Embodiment 3 and was a parallel embodiment of Embodiment 5, a flexible air grid unit 2 was a corrugated pipe, the corrugated pipe was provided with an air outflow hole 22 in a direction facing the glass to be processed, and the corrugated pipe was further provided with an air supply port communicated with a main air supply pipeline 1. The air outflow hole 22 was located at a maximum corrugation outer diameter position of the corrugated pipe. Referring to FIG. 10, the quantity of the air outflow holes 22 was two or more, an outlet airflow orienting and stabilizing structure was a fixing piece 25 located on a corrugated outer wall of the corrugated pipe and covering the air outflow hole, referring to FIG. 9, the fixing piece 25 was provided with air spraying holes 251 corresponding to positions of the air outflow holes 22, and the air spraying holes 251 were communicated with the air outflow holes 22.

The fixing piece 25 was made of a material not prone to deformation; and when the flexible air grid unit 2 deformed due to an arc-changing mechanism, a hole diameter of the air spraying hole 251 in the fixing piece 25 did not change, the plurality of air spraying holes 251 were formed in the fixing piece 25, so that all the air spraying holes 251 in one fixing piece 25 were relatively fixed when gas was jetted, and an air direction was determined while airflow was more stable.

The air outflow hole was formed in a riveting mode of a rivet. A hole diameter of the air outflow hole was 2-10 mm.

### Embodiment 7

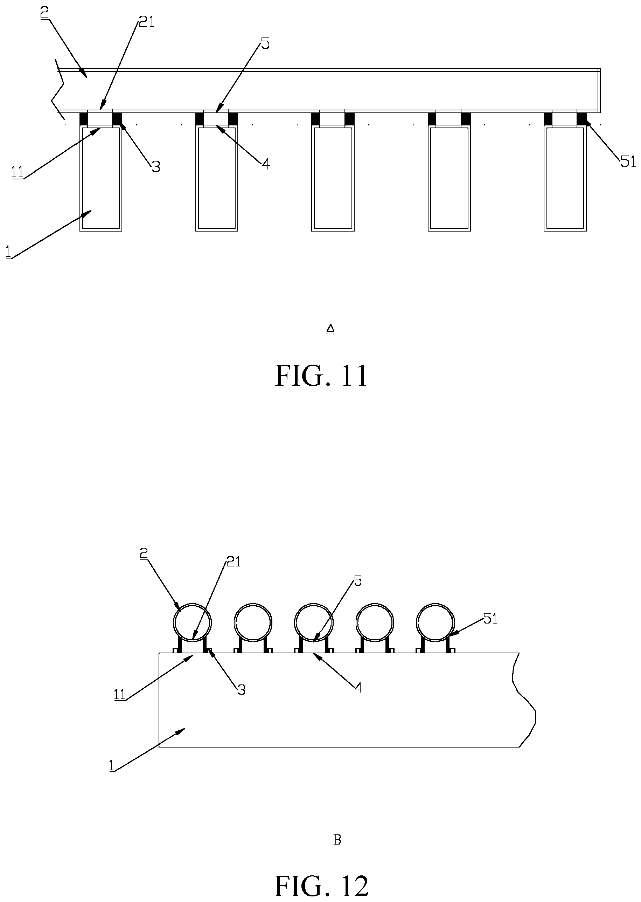

The present embodiment provided a curved glass toughening apparatus with butt-joint devices and further included the air inflow butt-joint auxiliary devices. The butt-joint auxiliary device 3 was used for butting a main air supply pipeline 1 with a flexible air grid unit 2, the butt-joint auxiliary device 3 included an air inlet 4, an air outlet 5 and a channel communicating the air inlet with the air outlet, a fixed extension in butt joint with an air supply port 11 of the main air supply pipeline 1 was arranged at the air inlet 4, a butt-joint end 51 in butt joint with an air inflow port 21 of the flexible air grid unit 2 was arranged at the air outlet 5, and the butt-joint auxiliary device 3 was a flexible butt-joint auxiliary device. The main air supply pipeline 1 was arranged perpendicular to the flexible air grid unit 2, referring to FIG. 1, and the butt-joint auxiliary device 3 was a connection part between the main air supply pipeline and flexible air grid unit, referring to FIG. 11 and FIG. 12.

For the flexible air grid unit 2 with an outer surface being an irregular curved surface, a butt-joint position could be completely matched with an outer contour of the flexible air grid unit 2; and when the flexible air grid unit 2 bent along with an arc-changing mechanism, the outer surface curvature of the flexible air grid unit might change, a butt-joint portion could change into an irregular curved surface accordingly, and an airflow leaking state could not occur. Arc-changing mechanism----(for the arc-changing mechanism, herein, please refer to a glass bending and forming mechanism in CN201220306623.8).

Referring to FIG. 11, when processing curved glass, the airflow started from the main air supply pipeline 1 via the air supply port 11, and the airflow was sent from the air inflow port 21 to the flexible air grid unit 2 via the butt-joint auxiliary device 3, and jetted on the curved glass to be processed and toughened via the flexible air grid unit 2.

### Embodiment 8

The present embodiment was further limited on the basis of Embodiment 7, and a material of a butt-joint auxiliary device 3 was preferentially high-temperature-resistant rubber. With the high-temperature-resistant rubber a high-elasticity polymer material, a shape of a flexible air grid unit 2 could be well fitted when a shape of the outer wall thereof was changed.

Referring to FIG. 12, a butt-joint end 51 was provided with a sealed outer edge matched with an outer wall contour of the flexible air grid unit 2. Sealed connection with the flexible air grid unit 2 could be better performed. The flexible air grid unit 2 was a metal corrugated pipe, and the butt-joint end 51 was connected with the flexible air grid unit 2 in a bonding mode. The butt-joint end 51 was provided with an annular clamping hoop for locking the metal corrugated pipe. The above-mentioned bonding mode being a fixing mode was merely an example, and any connection mode conceivable by a person skilled in the art could be used to form an alternative solution.

A main air supply pipeline 1 and the butt-joint auxiliary device 3 might be fixedly connected in modes of riveting, gluing, threaded connection, etc., and this would not be further stated herein.

The flexible air grid unit 2 was a metal corrugated pipe. The outer surface of a flexible air grid could withstand a high temperature of at least 150°C.

### Embodiment 9

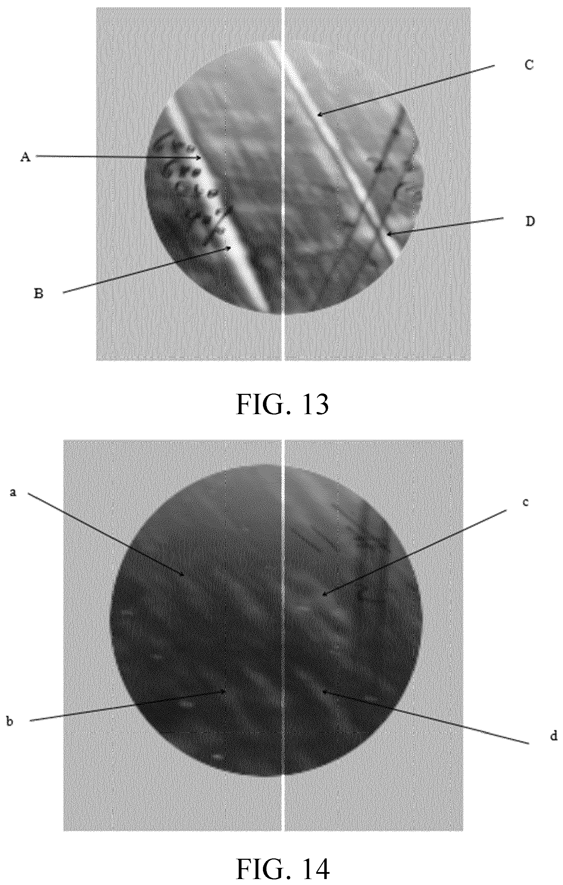

The present embodiment provided a comparative example, in FIG. 13, it was air patterns formed when curved glass was toughened by old split-type air boxes under a polarizer, and in FIG. 14, it was air patterns formed when curved glass was toughened using an air grid in the technology of the present invention under a polarizer. The air pattern in the prior art clearly showed that obvious abnormal positions corresponded to air box gaps.

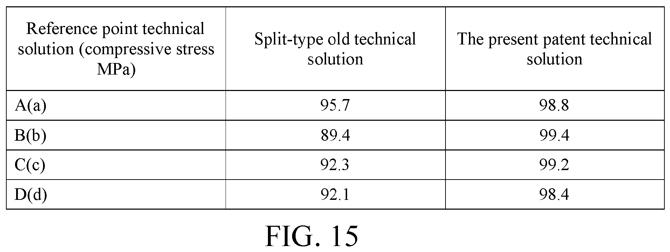

FIG. 15 was a table of compressive stress data of four points for each of air patterns of two curved glass for FIG. 13 and FIG. 14. The surface compressive stress at the air patterns decreased; and the compressive stress of the glass surface was about 98-103 MPa generally during an experiment, but the surface compressive stress at the air pattern was 5-10 MPa lower than that at these places. Data in this experiment: the surface compressive stress of other places was 100 MPa, and the lowest surface compressive stress at strip-shaped air patterns occurring during processing of an old apparatus was 89.4 MPa. However, application of this technology avoided the occurrence of the strip-shaped air patterns, only sporadic scattered air patterns appeared, and compressive stress reduction at the air patterns should be extremely small, and should be stabilized in a range of 2 MPa extremely close to 1 MPa, so that the glass toughening strength was greatly improved, with a qualitative leap.

### Embodiment 10

A plurality of main air supply pipelines 1 were arranged in parallel at intervals along an interior of a horizontal plane perpendicular to the glass conveying direction, the main air supply pipeline 1 was provided with a plurality of air supply ports 11, the air supply port 11 and an air inflow port 21 were connected via a connecting piece, two axial end portions of a flexible air grid unit 2 were respectively connected to the main air supply pipelines 1 arranged on left and right sides of a toughening section, and the left and right herein were based on the movement direction of glass, namely: the movement direction of glass was "front", a direction opposite to the movement direction of glass was "rear", a left side of the movement direction of glass was "left", and a right side of the movement direction of glass was "right". The flexible air grid unit was cylindrical or prismatic.

Finally, it should be noted that the foregoing embodiments are merely used for describing the technical solutions of the present invention, but are not intended to limit the present invention. Although the present invention is described in detail with reference to the foregoing embodiments, it should be appreciated by a person skilled in the art that, modifications may still be made to the technical solutions recorded in the foregoing embodiments, or equivalent replacements may be made to the part of all of the technical features; and these modifications or replacements will not cause the essence of corresponding technical solutions to depart from the scope as claimed.

## Claims

1. A curved glass toughening apparatus with an effect of weakening stress patterns, used for glass flexible shaft bending toughening, comprising a flexible air grid,
wherein the flexible air grid is composed of one or more flexible air grid units (2), the flexible air grid unit (2) is a bendable flexible tubular structure through inside, the flexible air grid unit (2) is provided with a plurality of air outflow holes (22) and air inflow ports (21) communicated with an interior space thereof, and the air outflow hole faces glass to be processed
**characterized in that** two axial ends of the flexible air grid unit (2) are of a closed structure.

2. The curved glass toughening apparatus with the effect of weakening the stress patterns according to Claim 1, wherein the plurality of flexible air grid units (2) are arranged in parallel between flexible shaft roller table gaps, main air supply pipelines (1) are located on one side of the flexible air grid unit (2) away from the glass to be processed, projections of the main air supply pipelines (1) arranged in parallel and the plurality of flexible air grid units (2) arranged in parallel in a vertical direction are in a mutually staggered mesh shape, and the main air supply pipelines (1) are communicated with the flexible air grid unit (2) via the air inflow port (21) from a projection intersection point position; and arc-changing mechanisms arranged at two ends of the main air supply pipelines (1) arranged in parallel drive the flexible air grid to be bent with the arc-changing mechanism when the glass to be processed is bent and formed.

3. The curved glass toughening apparatus with the effect of weakening the stress patterns according to Claim 1 or 2, wherein the flexible air grid unit (2) is a corrugated pipe.

4. The curved glass toughening apparatus with the effect of weakening the stress patterns according to Claim 2, wherein the main air supply pipelines (1) arranged in parallel and the plurality of flexible air grid units (2) arranged in parallel have an included angle of 90° on a vertical projection plane.

5. The curved glass toughening apparatus with the effect of weakening the stress patterns according to any one of Claims 1-4, wherein the flexible air grid unit (2) is cylindrical or prismatic.

6. The curved glass toughening apparatus with the effect of weakening the stress patterns according to any one of Claims 1-5 and further comprising an air outflow mechanism,
wherein the air outflow mechanism comprises a fluid smoothing structure arranged on an inner wall of the flexible air grid unit (2) and/or an outlet airflow orienting and stabilizing structure arranged on an outer wall of the flexible air grid unit (2); and the fluid smoothing structure is used to reduce resistance when airflow circulates in the flexible air grid unit (2),
and the outlet airflow orienting and stabilizing structure is used to constrain the direction of a jetted airflow and make the flow velocity and flow quantity of the airflow more uniform at the same time.

7. The curved glass toughening apparatus with the effect of weakening the stress patterns according to Claims 3 and 6, wherein the fluid smoothing structure is a composite rubber layer (23) and used for filling a corrugated inner wall of the corrugated pipe into a smooth inner wall.

8. The curved glass toughening apparatus with the effect of weakening the stress patterns according to Claim 7, wherein the air outflow hole is located at a maximum corrugation outer diameter position of the corrugated pipe.

9. The curved glass toughening apparatus with the effect of weakening the stress patterns according to Claims 7 or 8, wherein the outlet airflow orienting and stabilizing structure is an independent air nozzle (24) communicated with each of the air outflow holes (22),
the independent air nozzle (24) is of a tubular structure, one end of the independent air nozzle (24) is in butt joint with the air outflow hole and the other end of the independent air nozzle (24) faces the glass to be processed; or
wherein the outlet airflow orienting and stabilizing structure is a fixing piece arranged on a corrugated outer wall of the corrugated pipe and covering the air outflow hole, the fixing piece is provided with air spraying holes (251) corresponding to positions of the air outflow holes (22), and the air spraying holes (251) are communicated with the air outflow holes (22).

10. The curved glass toughening apparatus with the effect of weakening the stress patterns according to any one of Claims 1-9, and further comprising air inflow butt-joint auxiliary devices, wherein the air inflow butt-joint auxiliary device is used for butting main air supply pipelines (1) with an air grid unit, the air inflow butt-joint auxiliary device comprises an air inlet (4), an air outlet (5) and a channel communicating the air inlet (4) with the air outlet (5), a fixed extension in butt joint with an air supply port (11) of the main air supply pipelines (1) is arranged at a position of the air inlet (4), and a butt-joint end in butt joint with the air inflow port (21) of the flexible air grid unit (2) is arranged at a position of the air outlet (5).

11. The curved glass toughening apparatus with the effect of weakening the stress patterns according to Claim 10, wherein the butt-joint end is provided with a sealed outer edge matched with an outer wall contour of the flexible air grid unit (2).

12. The curved glass toughening apparatus with the effect of weakening the stress patterns according to Claim 10, wherein the butt-joint auxiliary device is a flexible butt-joint auxiliary device.

## Patentansprüche

1. Vorrichtung zum Härten von gebogenem Glas mit Wirkung zur Schwächung von Spannungsmustern, die zum Härten von Glas durch Biegen einer flexiblen Welle verwendet wird und die ein flexibles Luftgitter aufweist,
wobei das flexible Luftgitter aus einer oder mehreren flexiblen Luftgittereinheiten (2) zusammengesetzt ist, die flexible Luftgittereinheit (2) eine biegbare flexible röhrenförmige Struktur mit einem Innenraum ist, die flexible Luftgittereinheit (2) mit mehreren Luftaustrittslöchern (22) und Lufteinlassöffnungen (21) versehen ist, die mit ihrem Innenraum in Verbindung stehen, und die Luftaustrittslöcher dem zu bearbeitenden Glas zugewandt sind,
**dadurch gekennzeichnet, dass**
zwei axiale Enden der flexiblen Luftgittereinheit (2) eine geschlossene Struktur aufweisen.

2. Vorrichtung zum Härten von gebogenem Glas mit der Wirkung zur Schwächung von Spannungsmustern gemäß Anspruch 1, wobei die mehreren flexiblen Luftgitterelemente (2) parallel zwischen Lücken flexibler Wellenrollentische angeordnet sind, Hauptluftzufuhrleitungen (1) sich auf einer Seite der flexiblen Luftgittereinheit (2) befinden, die von dem zu bearbeitenden Glas Abstand hat, die Vorsprünge der parallel angeordneten Hauptluftzufuhrleitungen (1) und die mehreren flexiblen Luftgittereinheiten (2), die in vertikaler Richtung parallel angeordnet sind, in einer gegenseitig versetzten Netzform angeordnet sind, und die Hauptluftzufuhrleitungen (1) über die Lufteinlassöffnung (21) von einer Vorsprungsschnittpunktposition aus mit der flexiblen Luftgittereinheit (2) verbunden sind; und wobei an zwei Enden der parallel angeordneten Hauptluftzufuhrleitungen (1) angeordnete Bogenänderungsmechanismen das flexible Luftgitter antreiben, um sich mit dem Bogenänderungsmechanismus zu biegen, wenn das zu bearbeitende Glas gebogen und geformt wird.

3. Vorrichtung zum Härten von gebogenem Glas mit Wirkung zur Schwächung von Spannungsmustern gemäß Anspruch 1 oder 2, wobei die flexible Luftgittereinheit (2) ein Wellrohr ist.

4. Vorrichtung zum Härten von gebogenem Glas mit Wirkung zur Abschwächung von Spannungsmustern gemäß Anspruch 2, wobei die parallel angeordneten Hauptluftzufuhrleitungen (1) und die mehreren parallel angeordneten flexiblen Luftgittereinheiten (2) einen eingeschlossenen Winkel von 90° auf einer vertikalen Projektionsebene aufweisen.

5. Vorrichtung zum Härten von gebogenem Glas mit Wirkung zur Abschwächung von Spannungsmustern gemäß einem der Ansprüche 1 bis 4, wobei die flexible Luftgittereinheit (2) zylindrisch oder prismatisch ist.

6. Vorrichtung zum Härten von gebogenem Glas mit Wirkung zur Schwächung von Spannungsmustern gemäß einem der Ansprüche 1 bis 5, die ferner einen Luftaustrittsmechanismus aufweist,
wobei der Luftaustrittsmechanismus eine Fluidglättungsstruktur, die an einer Innenwand der flexiblen Luftgittereinheit (2) angeordnet ist, und/oder eine Auslassluftstrom-Ausrichtungs- und Stabilisierungsstruktur aufweist, die an einer Außenwand der flexiblen Luftgittereinheit (2) angeordnet ist; und die Fluidglättungsstruktur dazu dient, den Widerstand zu verringern, wenn Luft in der flexiblen Luftgittereinheit (2) zirkuliert,
und die Auslassluftstrom-Ausrichtungs- und Stabilisierungsstruktur dazu dient, die Richtung eines ausgestoßenen Luftstroms zu begrenzen und gleichzeitig die Strömungsgeschwindigkeit und Strömungsmenge des Luftstroms gleichmäßiger zu machen.

7. Vorrichtung zum Härten von gebogenem Glas mit Wirkung zur Schwächung von Spannungsmustern gemäß den Ansprüchen 3 und 6, wobei die Fluidglättungsstruktur eine Verbundgummischicht (23) ist und dazu verwendet wird, eine gewellte Innenwand des Wellrohrs zu einer glatten Innenwand auszufüllen.

8. Vorrichtung zum Härten von gebogenem Glas mit Wirkung zur Schwächung von Spannungsmustern gemäß Anspruch 7, wobei sich die Luftaustrittsöffnung an einer Position mit maximalem Wellendurchmesser des Wellrohrs befindet.

9. Vorrichtung zum Härten von gebogenem Glas mit Wirkung zur Schwächung von Spannungsmustern gemäß Anspruch 7 oder 8, wobei die Auslassluftstrom-Ausrichtungs- und Stabilisierungsstruktur eine unabhängige Luftdüse (24) ist, die mit jedem der Luftaustrittslöcher (22) in Verbindung steht,
wobei die unabhängige Luftdüse (24) eine röhrenförmige Struktur aufweist, wobei ein Ende der unabhängigen Luftdüse (24) in stumpfer Verbindung mit der Luftaustrittsöffnung steht und das andere Ende der unabhängigen Luftdüse (24) dem zu bearbeitenden Glas zugewandt ist; oder
wobei die Auslassluftstrom-Ausrichtungs- und Stabilisierungsstruktur ein Befestigungsteil ist, das an einer gewellten Außenwand des Wellrohrs angeordnet ist und die Luftaustrittsöffnung abdeckt, wobei das Befestigungsteil mit Luftsprühöffnungen (251) versehen ist, die den Positionen der Luftaustrittsöffnungen (22) entsprechen, und wobei die Luftsprühöffnungen (251) mit den Luftaustrittsöffnungen (22) in Verbindung stehen .

10. Vorrichtung zum Härten von gebogenem Glas mit Wirkung zur Schwächung von Spannungsmustern gemäß einem der Ansprüche 1 bis 9, die ferner eine Luftzufuhr-Stoßverbindungs-Zusatzvorrichtung aufweist, wobei die Luftzufuhr-Stoßverbindungs-Zusatzvorrichtung zum stumpfen Verbinden von Hauptluftzufuhrleitungen (1) mit einer Luftgittereinheit verwendet wird, wobei die Luftzufuhr-Stoßverbindungs-Zusatzvorrichtung einen Lufteinlass (4), einen Luftauslass (5) und einen Kanal, der den Lufteinlass (4) mit dem Luftauslass (5) verbindet, wobei eine feste Verlängerung in stumpfer Verbindung mit einer Luftzufuhröffnung (11) der Hauptluftzufuhrleitungen (1) an einer Position des Lufteinlasses (4) angeordnet ist und ein Stoßverbindungsende in stumpfer Verbindung mit der Lufteinlassöffnung (21) der flexiblen Luftgittereinheit (2) an einer Position des Luftauslasses (5) angeordnet ist.

11. Vorrichtung zum Härten von gebogenem Glas mit Wirkung zur Schwächung von Spannungsmustern gemäß Anspruch 10, wobei das Stoßverbindungsende mit einer abgedichteten Außenkante versehen ist, die an die Außenwandkontur der flexiblen Luftgittereinheit (2) angepasst ist.

12. Vorrichtung zum Härten von gebogenem Glas mit Wirkung zur Schwächung von Spannungsmustern gemäß Anspruch 10, wobei die Stoßverbindungs-Zusatzvorrichtung eine flexible Stoßverbindungs-Zusatzvorrichtung ist.

## Revendications

1. Appareil de trempe de verre bombé avec effet d'atténuation des traces de contrainte, utilisé pour la trempe de verre par cintrage d'axes flexibles, comprenant un réseau d'air flexible,
dans lequel le réseau d'air flexible est composé d'une ou plusieurs unités de réseau d'air flexible (2), l'unité de réseau d'air flexible (2) est une structure tubulaire flexible cintrable à travers l'intérieur, l'unité de réseau d'air flexible (2) est pourvue d'une pluralité d'orifices de sortie d'air (22) et de ports d'entrée d'air (21) en communication avec un espace intérieur de celle-ci, et l'orifice de sortie d'air est face à du verre à traiter
**caractérisé en ce que** deux extrémités axiales de l'unité de réseau d'air flexible (2) présentent une structure fermée.

2. Appareil de trempe de verre bombé avec effet d'atténuation des traces de contrainte selon la revendication 1, dans lequel la pluralité d'unités de réseau d'air flexible (2) sont disposées en parallèle entre des espacements de trains de rouleaux à arbre flexible, des conduites principales d'alimentation en air (1) sont situées d'un côté de l'unité de réseau d'air flexible (2) à l'opposé du verre à traiter, des parties saillantes des conduites principales d'alimentation en air (1) disposées en parallèle et la pluralité d'unités de réseau d'air flexible (2) disposées en parallèle dans une direction verticale sont en forme de maillage mutuellement alterné, et les conduites principales d'alimentation en air (1) sont en communication avec l'unité de réseau d'air flexible (2) via le port d'entrée d'air (21) à partir d'une position d'un point d'intersection de parties saillantes ; et des mécanismes de changement de courbure disposés à deux extrémités des conduites principales d'alimentation en air (1) disposés en parallèle amènent le réseau d'air flexible à être cintré avec le mécanisme de changement de courbure lorsque le verre à traiter est cintré et formé.

3. Appareil de trempe de verre bombé avec effet d'atténuation des traces de contrainte selon la revendication 1 ou 2, dans lequel l'unité de réseau d'air flexible (2) est un tuyau ondulé.

4. Appareil de trempe de verre bombé avec effet d'atténuation des traces de contrainte selon la revendication 2, dans lequel les conduites principales d'alimentation en air (1) disposées en parallèle et la pluralité d'unités de réseau d'air flexible (2) disposées en parallèle ont un angle inclus de 90° sur un plan de projection vertical.

5. Appareil de trempe de verre bombé avec effet d'atténuation des traces de contrainte selon l'une quelconque des revendications 1 à 4, dans lequel l'unité de réseau d'air flexible (2) est cylindrique ou prismatique.

6. Appareil de trempe de verre bombé avec effet d'atténuation des traces de contrainte selon l'une quelconque des revendications 1 à 5, et comprenant en outre un mécanisme de sortie d'air,
dans lequel le mécanisme de sortie d'air comprend une structure de lissage fluidique disposée sur une paroi intérieure de l'unité de réseau d'air flexible (2) et/ou une structure d'orientation et de stabilisation de flux d'air de sortie disposée sur une paroi extérieure de l'unité de réseau d'air flexible (2) ; et la structure de lissage fluidique est utilisée pour réduire la résistance quand un flux d'air circule dans l'unité de réseau d'air flexible (2), et la structure d'orientation et de stabilisation de flux d'air de sortie est utilisée pour contraindre la direction d'un flux d'air projeté et rendre simultanément la vitesse d'écoulement et la quantité d'écoulement plus uniformes.

7. Appareil de trempe de verre bombé avec effet d'atténuation des traces de contrainte selon les revendications 3 et 6, dans lequel la structure de lissage de fluide est une couche de caoutchouc composite (23) et utilisée pour remplir une paroi intérieure ondulée du tuyau ondulé et en faire une paroi intérieure lisse.

8. Appareil de trempe de verre bombé avec effet d'atténuation des traces de contrainte selon la revendication 7, dans lequel l'orifice de sortie d'air est situé au niveau d'une position de diamètre extérieur d'ondulation maximum du tuyau ondulé.

9. Appareil de trempe de verre bombé avec effet d'atténuation des traces de contrainte selon la revendication 7 ou 8, dans lequel la structure d'orientation et de stabilisation du flux d'air de sortie est une buse d'air indépendante (24) en communication avec chacun des orifices de sortie d'air (22),
la buse d'air indépendante (24) a une structure tubulaire, une extrémité de la buse d'air indépendante (24) est assemblée bout à bout avec l'orifice de sortie d'air et l'autre extrémité de la buse d'air indépendante (24) fait face au verre à traiter ; ou
dans lequel la structure d'orientation et de stabilisation du flux d'air de sortie est une pièce de fixation disposée sur une paroi extérieure ondulée du tuyau ondulé et recouvrant l'orifice de sortie d'air, la pièce de fixation est pourvue d'orifices de projection d'air (251) correspondant à des positions des orifices de sortie d'air (22), et les orifices de projection d'air (251) sont en communication avec les orifices de sortie d'air (22).

10. Appareil de trempe de verre bombé avec effet d'atténuation des traces de contrainte selon l'une quelconque des revendications 1 à 9, et comprenant en outre des dispositifs auxiliaires d'assemblage bout à bout d'entrée d'air, dans lequel le dispositif auxiliaire d'assemblage bout à bout d'entrée d'air est utilisé pour assembler bout à bout les conduites principales d'alimentation en air (1) avec une unité de réseau d'air, le dispositif auxiliaire d'assemblage bout à bout comprend une entrée d'air (4), une sortie d'air (5) et un canal faisant communiquer l'entrée d'air (4) avec la sortie d'air (5), une extension fixe assemblée bout à bout avec un port d'alimentation en air (11) des conduites principales d'alimentation en air est disposée au niveau d'une position de l'entrée d'air (4), et une extrémité d'assemblage bout à bout assemblée bout à bout avec l'orifice d'entrée d'air (21) de l'unité de réseau d'air flexible (2) est disposée au niveau d'une position de la sortie d'air (5).

11. Appareil de trempe de verre bombé avec effet d'atténuation des traces de contrainte selon la revendication 10, dans lequel l'extrémité d'assemblage bout à bout est pourvue d'une bordure extérieure scellée correspondant à un contour de paroi extérieure de l'unité de réseau d'air flexible (2).

12. Appareil de trempe de verre bombé avec effet d'atténuation des traces de contrainte selon la revendication 10, dans lequel le dispositif auxiliaire d'assemblage bout à bout est un dispositif auxiliaire d'assemblage bout à bout flexible.
